# EUROPEAN PATENT APPLICATION

(11) **EP 4 494 820 A1**
(43) Date of publication of application: **22.01.2025**
(21) Application number: 23770561.1
(22) Date of filing: 08.03.2023
(51) Int. Cl.: B25J 15/06

(54) **WORKPIECE CLAMPING DEVICE**

(30) Priority: 16.03.2022 JP 2022041495
(71) Applicant: SMC Corporation, Tokyo 101-0021 (JP)
(72) Inventor: SATO, Motohiro, Ibaraki 300-2493 (JP)
(74) Representative: Keil & Schaafhausen Patentanwälte PartGmbB
(86) International application number: PCT/JP2023/008700
(87) International publication number: WO 2023/176605

(57) **Abstract**

[Object] To provide a workpiece clamping device that can attract a workpiece with a workpiece attracting surface positioned along a predetermined portion of an upper surface of the workpiece, even when an upper surface of the workpiece is tilted with respect to the workpiece attracting surface.

[Solution] A workpiece clamping device 1 includes a magnetic chuck 5 including a support rod 6 that is reciprocable in a direction of a first axis L1, a pivot arm 20 that is pivotably connected to a distal end of the support rod at a proximal end in a direction of a second axis L2 through a first j oint 10, and a chuck unit 50 that is pivotably connected to the distal end of the pivot arm at a proximal end in a direction of a third axis L3 through a second joint 40 and is configured to attract a workpiece 110 with a magnetic force. The chuck unit has a workpiece attracting surface 48a at a distal end of a casing 51. The first and second joints have first and second central points S1, S2. The support rod and the pivot arm are pivotable relative to each other about the first central point S1, and the pivot arm and the chuck unit are pivotable relative to each other about the second central point S2.

## Description

### Technical Field

The present invention relates to a workpiece clamping device including a magnetic chuck that attracts a workpiece with a magnetic force.

### Background Art

A magnetic chuck that includes an electromagnet in a casing and a magnetic chuck that includes a permanent magnet attached to a piston movable in a cylinder hole of a casing and moved together with the piston are conventionally known, for example, as described in Patent Literatures 1 and 2.

The magnetic chuck described in Patent Literature 1 includes an electromagnet in a casing and has a workpiece attracting surface extending in a horizontal direction perpendicular to the vertical direction on a lower surface of the casing. When the electromagnet is activated, a magnetic force is generated on the workpiece attracting surface, and thus the magnetic chuck can attract a workpiece with the workpiece attracting surface. The magnetic chuck can be moved vertically by a lift connected to the upper surface of the casing.

The magnetic chuck described in Patent Literature 2 has a cylinder hole in the casing and includes a piston that can move vertically in the cylinder hole. A permanent magnet is attached to the lower portion of the piston, and the permanent magnet can move vertically in the cylinder hole together with the piston. The magnetic chuck has a workpiece attracting surface that extends in a horizontal direction perpendicular to the vertical direction at the lower end, and a robot arm that moves the magnetic chuck in the vertical direction is connected to the upper end.

When these magnetic chucks attract a workpiece, an upper surface of the workpiece may be tilted with respect to the workpiece attracting surface. In such a case, a portion of the workpiece attracting surface touches the upper surface of the workpiece when the magnetic chuck moves down, and the workpiece attracting surface cannot be positioned along the upper surface of the workpiece. Thus, the magnetic chuck is unable to attract the workpiece with the workpiece attracting surface.

To solve this problem, a joint described in Patent Literature 3, i.e., a joint that enables the magnetic chuck to pivot about an axis perpendicular to the vertical direction, may be provided at an upper portion of each of the magnetic chucks described in Patent Literatures 1 and 2. This enables, even if a portion of the workpiece attracting surface comes into contact with the upper surface of the workpiece, the magnetic chuck to pivot about the axis of the joint when moved further downward and to come into contact with an upper surface of the workpiece with the workpiece attracting surface positioned along the upper surface of the workpiece.

However, when the magnetic chuck moves downward while pivoting about the axis of the j oint, the workpiece attracting surface attracts the upper surface of the workpiece at a position shifted from a predetermined position. The shifting amount of the magnetic chuck having a permanent magnet movable within a frame is large, because the dimension in the vertical dimension is larger than the dimension in the horizontal direction.

### Citation List

### Patent Literature

PTL 1: Japanese Unexamined Patent Application Publication No. 7-171784
PTL 2: Japanese Unexamined Patent Application Publication No. 2019-186324
PTL 3: Japanese Registered Utility Model No. 3087910

### Summary of Invention

### Technical Problem

In view of the above, the technical object of the present invention is to provide a workpiece clamping device that can attract a workpiece, even when an upper surface of the workpiece is tilted with respect to the workpiece attracting surface, with the workpiece attracting surface positioned along a predetermined portion of the upper surface of the workpiece.

### Solution to Problem

To solve the problem, a workpiece clamping device according to the present invention comprises a magnetic chuck including: a support rod that is reciprocable in a direction of a first axis and has a distal end and a proximal end at ends in a movement direction thereof, a pivot arm that has a first end and a second end at ends in a direction of a second axis and is pivotably connected to the distal end of the support rod at the first end through a first j oint, a chuck unit that includes a casing having a distal end and a proximal end at ends in a direction of a third axis and pivotably connected to the second end of the pivot arm at the proximal end of the casing through a second joint and that is configured to attract a workpiece with a magnetic force, wherein, in the chuck unit, the magnetic chuck has a workpiece attracting surface extending in a direction perpendicular to the third axis at the distal end of the casing, the first joint has a first central point, the support rod and the pivot arm are pivotable relative to each other about the first central point, the second joint has a second central point, and the pivot arm and the chuck unit are pivotable relative to each other about the second central point.

In this case, preferably, the chuck unit has a cylinder hole extending in the direction of the third axis in the casing, a chuck piston movable in the cylinder hole, and a permanent magnet attached to the chuck piston to move with the chuck piston, and the permanent magnet is reciprocable in the direction of the third axis between an attracting position that is located adjacent to the distal end of the casing to which the permanent magnet is moved to attract a workpiece with the workpiece attracting surface and a non-attracting position that is located adj acent to the proximal end of the casing to which the permanent magnet is moved to end the attraction of the workpiece.

Furthermore, preferably, the first joint includes a first ball member having the first central point and a first recess accommodating the first ball member in a slidable manner, and the second joint includes a second ball member having the second central point and a second recess accommodating the second ball member in a slidable manner. Furthermore, preferably, in the first j oint, the first ball member is attached to the support rod and the first recess is open at the first end of the pivot arm, and, in the second joint, the second ball member is attached to the proximal end of the chuck unit and the second recess is open at the second end of the pivot arm.

Furthermore, preferably, the pivot arm has a first locking mechanism that enables and disables relative pivoting between the first ball member in the first recess and the first recess of the first joint and relative pivoting between the second ball member in the second recess and the second recess of the second joint.

In this case, preferably, the pivot arm has a first cover member attached to the first end of the pivot arm and having a first through hole extending therethrough in the direction of the second axis and a second cover member attached to the second end of the pivot arm and having a second through hole extending therethrough in the direction of the second direction, the first locking mechanism includes: the first and second through holes in the first and second cover members; first and second cylinder holes in first and second end portions of the pivot arm; a first piston movable in the first cylinder hole and having a first hole open at the first end; a second piston movable in the second cylinder hole and having a second hole open at a second end; a first pressure chamber located in a second end portion of the first cylinder hole in the direction of the second axis and defined by the first piston; and a second pressure chamber located in a first end portion of the second cylinder hole in the direction of the second axis and defined by the second piston, the first through hole and the first hole are in communication with each other in the direction of the second axis, and an inner space defined by the first through hole and the first hole is the first recess accommodating the first ball member, an inner surface of the first through hole has a first outer sliding-contact surface that is in sliding contact with a portion of the outer surface of the first ball member that is adjacent to the first end in the direction of the second axis, an inner surface of the first hole has a first inner sliding-contact surface that is in sliding contact with a portion of the outer surface of the first ball member that is adjacent to the second end in the direction of the second axis, the second through hole and the second hole are in communication with each other in the direction of the second axis, and an inner space defined by the second through hole and the second hole is the second recess accommodating the second ball member, an inner surface of the second through hole has a second outer sliding-contact surface that is in sliding contact with a portion of the outer surface of the second ball member that is adjacent to the second end in the direction of the second axis, an inner surface of the second hole has a second inner sliding-contact surface that is in sliding contact with a portion of the outer surface of the second ball member that is adjacent to the second end in the direction of the second axis, the first and second pistons are reciprocated in the direction of the second axis by compressed air provided to and discharged from the first and second pressure chambers of the first and second cylinder holes, and when the first piston is moved toward the first end in the direction of the second axis and the second piston is moved toward the second end in the direction of the second axis by the compressed air provided to the first and second pressure chambers, the first ball member is held on the first outer sliding-contact surface and the first inner sliding-contact surface and the second ball member is held on the second outer sliding-contact surface and the second inner sliding-contact surface, allowing the pivot arm to be locked against the support rod and the chuck unit.

Furthermore, preferably, the first outer sliding-contact surface of the first through hole is in contact with a portion of the outer surface of the first ball member that is away from the first central point toward the first end in the direction of the second axis, the first inner sliding-contact surface of the first hole is in contact with a portion of the outer surface of the first ball member that is away from the first central point toward the second end in the direction of the second axis, the second outer sliding-contact surface of the second through hole is in contact with a portion of the outer surface of the second ball member that is away from the second central point toward the second end in the direction of the second axis, and the second inner sliding-contact surface of the second hole is in contact with a portion of the outer surface of the second ball member that is away from the second central point toward the first end in the direction of the second axis. Furthermore, preferably, the first inner sliding-contact surface of the first piston is a conical surface having an inner diameter gradually increasing toward the first end in the direction of the second axis, and the second inner sliding-contact surface of the second piston is a conical surface having an inner diameter gradually increasing toward the second end in the direction of the second axis.

The workpiece clamping device according to the present invention comprises the magnetic chucks according to any one of claims 5 to 8 including a plurality of magnetic chucks, and a support supporting the support rods of the magnetic chucks in a reciprocable manner, wherein the support includes: an arm support member extending in a direction perpendicular to the first axis and having through holes in which the support rods of the magnetic chucks are individually inserted in a reciprocable manner; a plurality of connectors attached to the arm support member and having communication holes in which the support rods of the magnetic chucks are individually inserted; the plurality of connectors having a second locking mechanism configured to lock and unlock the support rod against and from the arm support member; stoppers attached to the corresponding support rods and, when the support rods are moved, the stoppers each come in contact with the first end of the connector to prevent the support rod from being detached from the through holes; and spring members each located between the connector and the support rod of the corresponding magnetic chucks and configured to urge the magnetic chucks toward the first end in the direction of the first axis against the arm support member, and the support rods of the magnetic chucks are positioned at intervals with the first axes being parallel to each other on the arm support member.

In this case, preferably, the second locking mechanism of the connector includes: a third cylinder hole extending in the direction of the first axis in the communication hole of the connector; a brake pad having a pressing surface facing a side surface of the support rod in the third cylinder hole; a third piston movable in the third cylinder hole in the direction of the first axis and having a sloping surface located radially outward from the brake pad relative to the first axis in the third cylinder hole; a pressing member located between the brake pad and the sloping surface and configured to receive a pressing force applied in a radially inward direction by the sloping surface when the third piston moves; and a third pressure chamber that is a portion of the third cylinder hole defined by the third piston, wherein compressed air provided to the third pressure chamber of the third cylinder hole allows the third piston to reciprocate in the direction of the first axis, and when the compressed air provided to the third pressure chamber moves the third piston, the pressing member pushes the brake pad in the radially inward direction upon reception of a pressing force applied in the radially inward direction by the sloping surface, and the pressing surface pushes a side surface of the support rod, locking the support rod against the arm support member.

Furthermore, preferably, the connector includes a connecting body having first and second ends at ends in the direction of the first axis, connected to the arm support member at the first end, and having the communication hole in it, the connecting body has a fixing member attached to the first end, the fixing member has an insertion hole extending therethrough in the direction of the first axis and is located in the through hole of the arm support member, the insertion hole is in communication with the communication hole of the connecting body, and the support rod is located in the insertion hole and the communication hole, and the fixing member in the through hole of the arm support member is detachably attached to the arm support member, allowing the connecting body to be detachably attached to the arm support member.

Furthermore, preferably, the fixing member attached to the arm support member protrudes from a surface at the first end in the direction of the first axis of the arm support member, the support rod has a proximal end portion protruding from an end in the direction of the first axis of the insertion hole, the stopper is attached to the end portion, and the stopper has a cylindrical shape having a diameter larger than an inner diameter of the insertion hole of the fixing member and smaller than an inner diameter of the through hole of the arm support.

Furthermore, preferably, the spring member is a compression spring located between the second end of the connecting body and the first end of the support rod.

### Advantageous Effects of Invention

As described above, the present invention can provide a workpiece clamping device that can attract a workpiece, even when an upper surface of the workpiece is tilted with respect to the workpiece attracting surface, with the workpiece attracting surface positioned along a predetermined portion of the upper surface of the workpiece.

### Brief Description of Drawings

[Fig. 1] Fig. 1 is a front view of a workpiece clamping device according to an embodiment of the present invention.
[Fig. 2] Fig. 2 is a side view of the workpiece clamping device.
[Fig. 3] Fig. 3 is a cross-sectional view of the workpiece clamping device viewed in a direction of III-III arrow in Fig. 2.

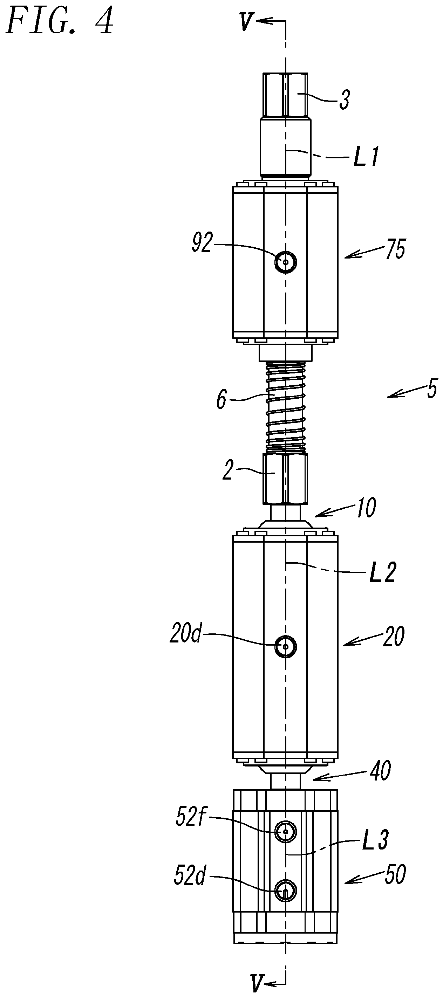

[Fig. 4] Fig. 4 is a front view of a magnetic check in an extended state with a connector attached.
[Fig. 5] Fig. 5 is a cross-sectional view of the magnetic check and the connector viewed in a direction of V-V arrow in Fig. 4.
[Fig. 6] Fig. 6 is a front view of a pivot arm.
[Fig. 7] Fig. 7 is a plan view of the pivot arm.
[Fig. 8] Fig. 8 is a cross-sectional view of the pivot arm viewed in a direction of VIII-VIII arrow in Fig. 6.
[Fig. 9] Fig. 9 is an exploded perspective view of the pivot arm.
[Fig. 10] Fig. 10 is a cross-sectional view of the pivot arm when first and second joints are in a pivotable state.
[Fig. 11] Fig. 11 is a cross-sectional view of a chuck unit having a permanent magnet moved to an attracting position.
[Fig. 12] Fig. 12 is a cross-sectional view of the chuck unit having the permanent magnet moved to a non-attracting position.
[Fig. 13] Fig. 13 is a front view of the connector in which a support rod is inserted.
[Fig. 14] Fig. 14 is a cross-sectional view of the support rod and the connector viewed in a direction of XIV-XIV in Fig. 13.
[Fig. 15] Fig. 15 is a magnified cross-sectional view of the connector in Fig. 14.
[Fig. 16] Fig. 16 is an exploded perspective view of the support rod and the connector.
[Fig. 17] Fig. 17 is a view illustrating how the chuck unit attracts a workpiece when an upper surface of the workpiece is tilted upward with respect to a workpiece attracting surface.
[Fig. 18] Fig. 18 is a view illustrating how the chuck unit attracts a workpiece when an upper surface of the workpiece is tilted downward with respect to the workpiece attracting surface.

### Description of Embodiment

Hereinafter, a workpiece clamping device according to the present invention will be described. In this embodiment, a workpiece clamping device that includes multiple magnetic chucks and in which chuck units of the magnetic chucks each have a permanent magnet movable in the casing is used as an example. The workpiece clamping device may include one magnetic chuck. The magnetic chuck may have an electromagnet fixed in the casing.

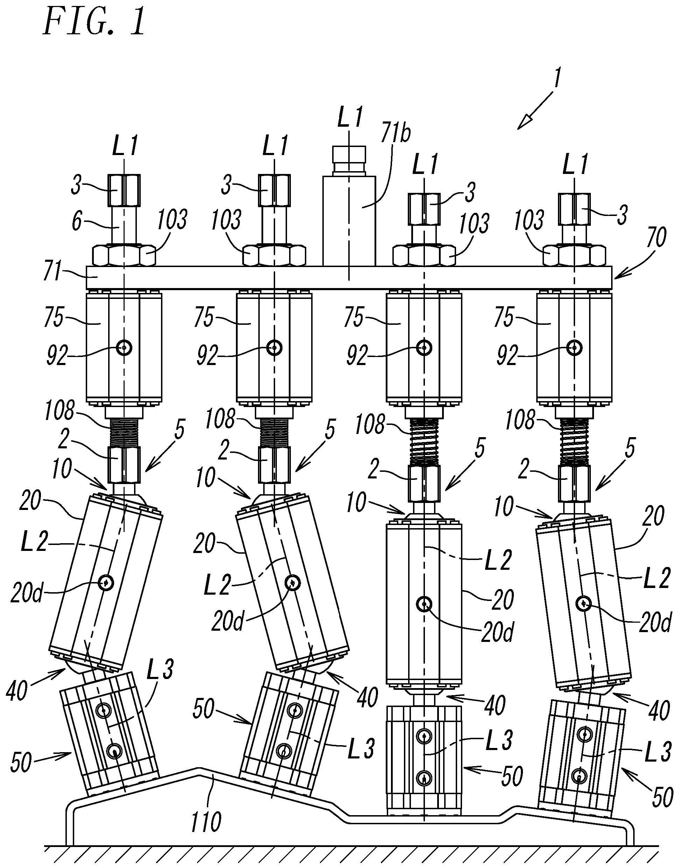

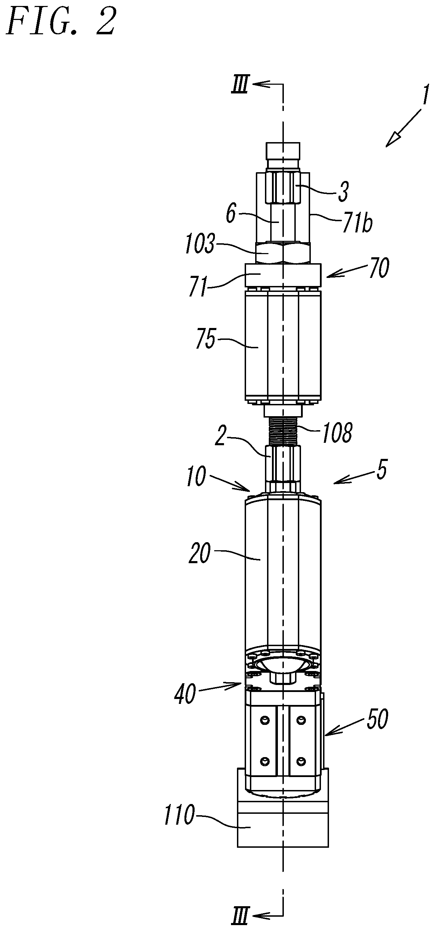

Figs. 1 to 3 illustrate an embodiment of the workpiece clamping device 1 according to the present invention. The workpiece clamping device 1 includes multiple magnetic chucks 5 and a support 70. The magnetic chucks 5 are supported by the support 70 in a reciprocable manner. In this embodiment, four magnetic chucks 5 are provided for the support 70, and the support 70 is connected to, for example, a robot distal end arm or a lift, and the entire workpiece clamping device 1 is movable in a direction perpendicular to an arm support member 71 of the support 70 (hereinafter, may be referred to as "a direction of the first axis L 1 ").

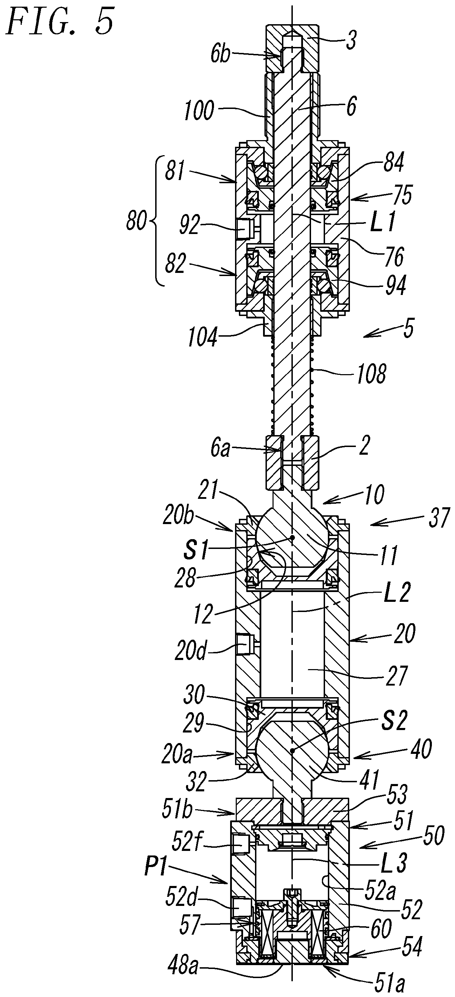

As illustrated in Fig. 5, the magnetic chuck 5 has a support rod 6, which can reciprocate in the direction of the first axis L1 and has a distal end 6a and a proximal end 6b at ends in the movement direction, a pivot arm 20, which has a proximal end 20b (first end) and a distal end 20a (second end) at ends in a direction of a second axis L2 and is pivotably connected to the distal end 6a of the support rod 6 through a first joint 10 at the proximal end 20b, and a chuck unit 50, which has a casing 51 having a distal end 51a and a proximal end 51b at ends in a direction of a third axis L3 and is pivotably connected to the distal end 20a of the pivot arm 20 through a second joint 40 at the proximal end 51b of the casing 51. The chuck unit 50 attracts a workpiece with a magnetic force. In this embodiment, the magnetic chuck 5 includes the support rod 6, the first joint 10, the pivot arm 20, the second joint 40, and the chuck unit 50, in this order from the proximal end to the distal end in the direction of the first axis L1. Fig. 5 illustrates a state in which the support rod 6 is in a connector 75, which will be described later.

In this embodiment, the support rod 6 has an elongated cylindrical shape extending in the direction of the first axis L1. A stopper 3, which will be described later, is screwed to the proximal end 6b of the support rod 6, and a connecting nut 2 is screwed to the distal end 6a of the support rod 6.

As illustrated in Figs. 5 and 8 to 10, the first joint 10 includes a first ball member 11 and a first recess 12 that accommodates the first ball member 11 in a slidable manner. The first joint has a first central point S1 at the center, and the support rod 6 and the pivot arm 20 are connected to each other in a pivotable manner about the first central point S1.

In this embodiment, the first ball member 11 is spherical, and the first ball member 11 is screwed to the connecting nut 2 at the proximal end in the direction of the first axis L1. The first central point S1 is on the first axis L1.

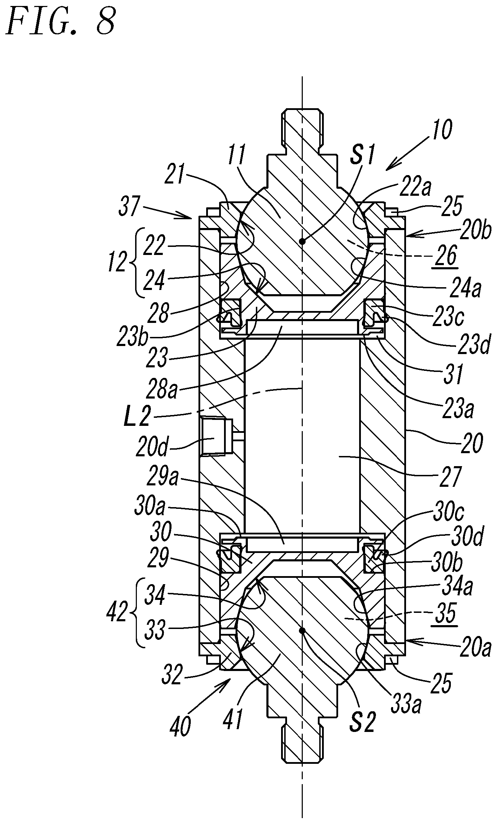

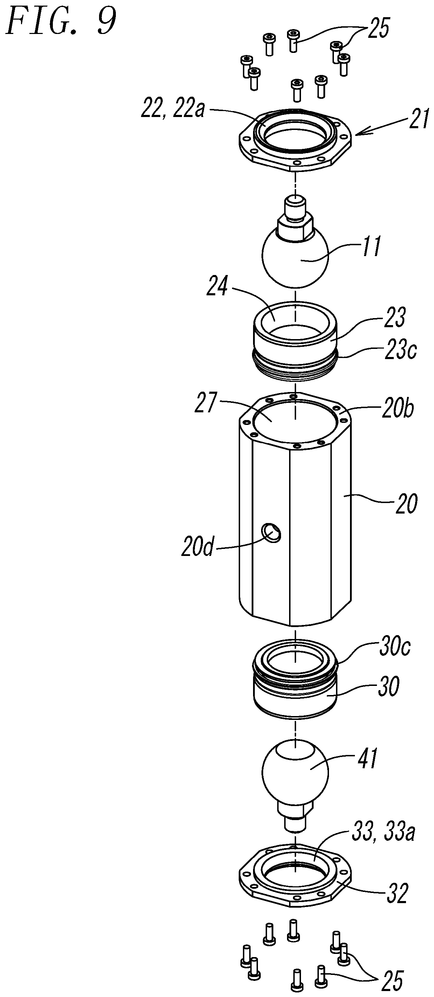

The first recess 12 is open at the proximal end 6a in the direction of extension (in the direction of the second axis L2) of the pivot arm 20. In this embodiment, as illustrated in Figs. 8 and 9, the first recess 12 is composed of a first through hole 22 of a first cover member 21 attached to the proximal end 20b of the pivot arm 20 and a first hole 24 of a first piston 23 provided in a proximal end portion of the pivot arm 20 and open toward the proximal end (one end) in the direction of the second axis L2. The first through hole 22 and the first hole 24 are in communication with each other in the direction of the second axis L2, and an inner space 26 defined by the first through hole 22 and the first hole 24 is the first recess 12 that accommodates the first ball member 11.

The first cover member 21 has a plate-like shape in this embodiment, and the first cover member 21 is fixed to the proximal end 20b of the pivot arm 20 by bolts 25 or other fastening members at the outer peripheral portion. The first cover member 21 has the first through hole 22, which extends therethrough in the direction of the second axis L2, in the middle. The first through hole 22 has openings at ends in the direction of the second axis L2 of the first cover member 21, and its inner surface is a first outer sliding-contact surface 22a that extends annularly around the second axis L2 and is in sliding contact with a proximal end portion of the outer surface of the first ball member 11. The first outer sliding-contact surface 22a is in contact with a portion of the outer surface of the first ball member 11 that is away from the first central point S1 toward the proximal end in the direction of the second axis L2.

In this embodiment, the first hole 24 of the first piston 23 has a hemispherical shape recessed from the proximal end toward the distal end in the direction of the second axis L2, and the inner surface of the first hole 24 is a first inner sliding-contact surface 24a that is in sliding contact with a distal end portion of the outer surface of the first ball member 11. The first inner sliding-contact surface 24a is a conical surface having an inner diameter gradually increasing toward the proximal end and is in contact with a portion of the outer surface of the first ball member 11 that is away from the first central point S1 toward the distal end in the direction of the second axis L2.

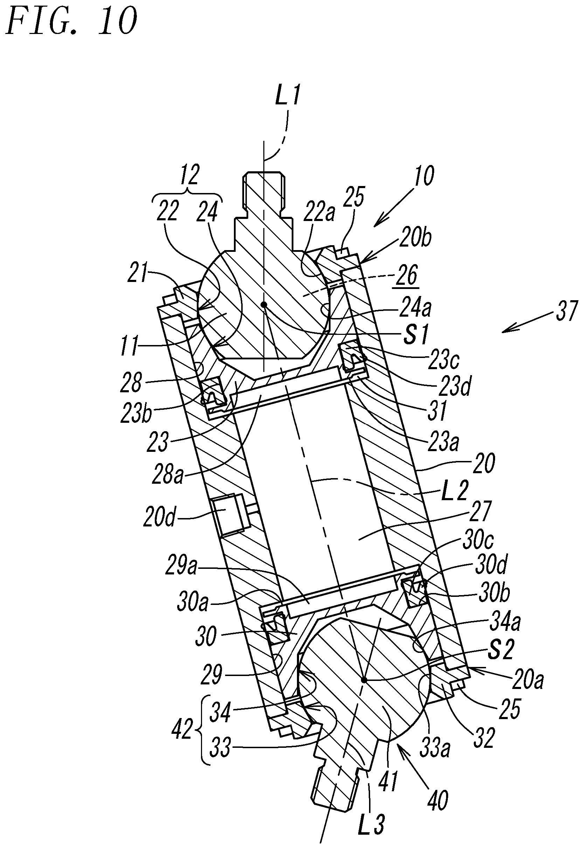

As described above, the first ball member 11 is supported in the first recess 12 in a pivotable manner as illustrated in Figs. 5 and 10, and thus the support rod 6 and the pivot arm 20 are pivotable about the first central point S1 of the first ball member 11 with respect to each other. The first piston 23 will be described in detail later.

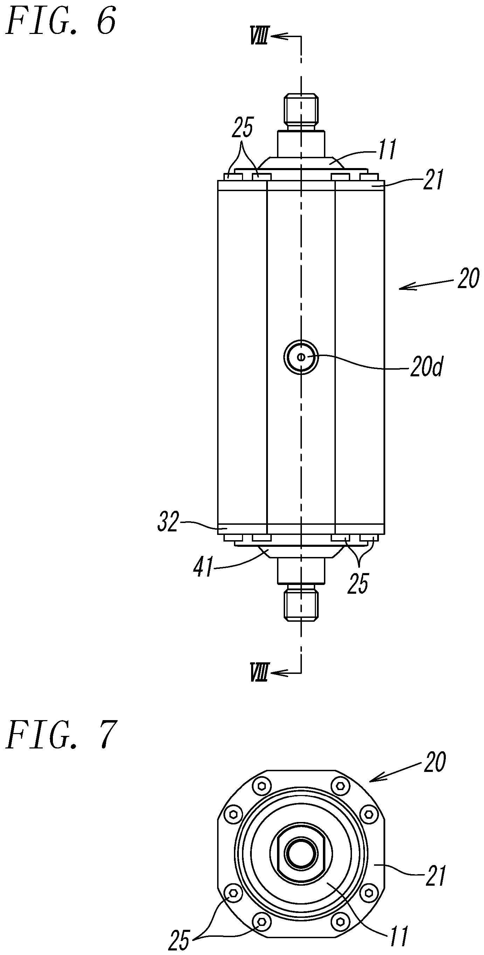

In this embodiment, as illustrated in Figs. 6 to 10, the pivot arm 20 has a tubular shape extending in the direction of the second axis L2. The pivot arm 20 has an arm through hole 27 extending therethrough in the direction of the second axis L2 and has a first cylinder hole 28 and a second cylinder hole 29 in proximal and distal end portions of the pivot arm 20. The first and second cylinder holes 28, 29 have the same inner diameter and the same depth and have a diameter larger than the inner diameter of the arm through hole 27. The first piston 23 is movably located in the first cylinder hole 28, and the second piston 30 is movably located in the second cylinder hole 29.

The depth of the first cylinder hole 28 is such that a gap 31 is formed between a top 23a at the distal end of the first piston 23 and the bottom surface of the first cylinder hole 28 when the first inner sliding-contact surface 24a of the first piston 23 is in contact with the outer surface of the first ball member 11. When the first piston 23 is retracted in this gap 31 toward the distal end, the first ball member 11 can pivot relative to the first recess 12.

In this embodiment, as illustrated in Figs. 8 and 10, the first piston 23 has a cylindrical shape and has an annular groove 23b extending in the circumferential direction on a distal end portion of the outer peripheral surface of the first piston 23. A sealing member 23c is in this groove 23b to seal between the outer peripheral surface of the first piston 23 and the inner peripheral surface of the first cylinder hole 28. The sealing member 23c is a lip seal, and a lip 23d of the sealing member 23c is tilted such that the outer diameter gradually increases toward the distal end of the first piston 23. Thus, the lip 23d prevents the compressed air from flowing from the distal end side to the proximal end side between the outer peripheral surface of the first piston 23 and the inner peripheral surface of the first cylinder hole 28.

The first cylinder hole 28 has a first pressure chamber 28a, which is defined by the first piston 23, in a distal end portion. In this embodiment, the first pressure chamber 28a is located between the top 23a of the first piston 23 and the bottom surface of the first cylinder hole 28 and is in communication with the arm through hole 27. The pivot arm 20 has a supply and exhaust port 20d in the middle in the direction of the second axis L2 through which compressed air can enter the arm through hole 27 from the outside.

As illustrated in Figs. 5, and Figs. 8 to 10, in this embodiment, a second joint 40, which connects the distal end 20a of the pivot arm 20 and the proximal end 51b of the casing 51 of the chuck unit 50, has a configuration similar to that of the first joint 10 described above and includes a second ball member 41 and a second recess 42 that accommodates the second ball member 41 in a slidable manner. The second joint 40 has a second central point S2, and the pivot arm 20 and the chuck unit 50 are connected to each other in a pivotable manner about the second central point S2.

In this embodiment, the second ball member 41 is spherical, and the second ball member 41 is screwed to the casing 51 of the chuck unit 50 at the distal end in the direction of the third axis L3 (the direction of extension of the chuck unit 50). The second central point S2 is on the third axis L3.

The second recess 42 has an opening at the distal end of the pivot arm 20. In this embodiment, the second recess 42 is composed of a second through hole 33 of a second cover member 32 attached to the distal end of the pivot arm 20 and a second hole 34 provided in the distal end portion of the pivot arm 20 and open toward the distal end side in the direction of the second axis L2 of a second piston 30. The second through hole 33 and the second hole 34 are in communication with each other in the direction of the third axis L3, and an inner space 35 defined by the second through hole 33 and the second hole 34 is the second recess 42 that accommodates the second ball member 41.

As illustrated in Figs. 8 to 10, the second cover member 32 has a plate-like shape in this embodiment, and the second cover member 32 is fixed to the distal end 20a of the pivot arm 20 by bolts 25 or other fastening members at the outer peripheral portion. The second cover member 32 has the second through hole 33, which extends therethrough in the direction of the second axis L2, in the middle. The second through hole 33 has openings at ends in the direction of the second axis L2, and the inner surface of the second through hole 33 is a second outer sliding-contact surface 33a that extends annularly around the second axis L2 and is in sliding contact with a second end portion of the outer surface of the second ball member 41. The second outer sliding-contact surface 33a is in contact with a portion of the outer surface of the second ball member 41 that is away from the second central point S2 toward the distal end in the direction of the second axis L2.

The second hole 34 of the second piston 30 has a hemispherical shape recessed from the distal end side to the proximal end side in this embodiment. The inner surface of the second hole 34 is a second inner sliding-contact surface 34a that is in sliding contact with a proximal end portion of the outer surface of the second ball member 41. The second inner sliding-contact surface 34a is a conical surface having an inner diameter gradually increasing toward the distal end and is in contact with a portion of the outer surface of the second ball member 41 that is away from the second central point S2 toward the proximal end in the direction of the second axis L2.

As described above, the second ball member 41 is supported in the second recess 42 in a pivotable manner, and thus the pivot arm 20 and the chuck unit 50 illustrated in Fig. 5 are pivotable about the second central point S2 of the second ball member 41 with respect to each other.

Furthermore, in this embodiment, the depth of the second cylinder hole 29, which accommodates the second piston 30 in a movable manner, is such that a gap 31 is formed between a top 30a at the proximal end of the second piston 30 and the bottom surface of the second cylinder hole 29 when the second inner sliding-contact surface 34a of the second piston 30 is in contact with the outer surface of the second ball member 41. When the second piston 30 is retracted in this gap 31 toward the proximal end, the second ball member 41 can pivot relative to the second recess 42.

Furthermore, in this embodiment, the second piston 30 has a cylindrical shape and has an annular groove 30b extending in the circumferential direction on the outer peripheral surface of the second piston 30. A sealing member 30c is in this groove 30b to seal between the outer peripheral surface of the second piston 30 and the inner peripheral surface of the second cylinder hole 29. The sealing member 30c is a lip seal, and a lip 30d of the sealing member 30c is tilted such that the outer diameter gradually increases from the distal end side toward the proximal end side. Thus, the lip 30d prevents the compressed air from flowing from the proximal end side to the distal end side between the outer peripheral surface of the second piston 30 and the inner peripheral surface of the second cylinder hole 29.

The second cylinder hole 29 has a second pressure chamber 29a, which is defined by the second piston 30, in a proximal end portion. In this embodiment, the second pressure chamber 29a is located between the top 30a at the proximal end side of the second piston 30 and the bottom surface of the second cylinder hole 29 and is in communication with the arm through hole 27.

As illustrated in Figs. 8 and 10, the pivot arm 20 has a first locking mechanism 37 that enables and disables relative pivoting in the first joint 10 between the first ball member 11 in the first recess 12 and the first recess 12, and relative pivoting in the second joint 40 between the second ball member 41 in the second recess 42 and the second recess 42.

In this embodiment, the first locking mechanism 37 includes the first and second through holes 22, 33 in the respective first and second cover members 21, 32, the first and second cylinder holes 28, 29 in the respective proximal and distal end portions of the pivot arm 20, the first piston 23 movably located in the first cylinder hole 28, the second piston 30 movably located in the second cylinder hole 29, the first pressure chamber 28a in the first cylinder hole 28, and the second pressure chamber 29a in the second cylinder hole 29.

In the first locking mechanism 37, when compressed air is introduced into the arm through hole 27 from the supply and exhaust port 20d, the compressed air is provided to the first and second pressure chambers 28a, 29a of the respective first and second cylinder holes 28, 29 to move or push the first and second pistons 23, 30 toward the distal and proximal ends in the direction of the second axis L2. This allows the first ball member 11 to be held on the first outer sliding-contact surface 22a and the first inner sliding-contact surface 24a and the second ball member 41 to be held on the second outer sliding-contact surface 33a and the second inner sliding-contact surface 34a, disabling pivoting of the pivot arm 20 relative to the support rod 6 and the chuck unit 50 illustrated Fig. 5.

When the compressed air in the arm communication hole 27 is discharged through the supply and exhaust port 20d, the pressing force of the first and second pistons 23, 30 against the first and second ball members 11, 41 is released. Thus, the first ball member 11 is not held on the first outer sliding-contact surface 22a and the first inner sliding-contact surface 24a, and the second ball member 41 is not held on the second outer sliding-contact surface 33a and the second inner sliding-contact surface 34a, and thus the pivot arm 20 can pivot relative to the support rod 6 and the chuck unit 50 illustrated in Fig. 5, i.e., be in an unlocked state.

Next, the chuck unit 50 is described. As illustrated in Figs. 5, 11, and 12, the chuck unit 50 includes a casing 51, a cylinder hole 52a extending in the direction of the third axis L3 in the casing 51, a chuck piston 57 movable in the cylinder hole 52a, and a permanent magnet 60 attached to the chuck piston 57 to move together with the chuck piston 57. The chuck unit 50 attracts the workpiece 110 with a magnetic force.

In this embodiment, the casing 51 has a cuboidal shape extending in the direction of the third axis L3 and includes a cylinder tube 52 having the cylinder hole 52a in it, a top cover 53 attached to the proximal end of the cylinder tube 52, a bottom cover 54 attached to the distal end of the cylinder tube 52. The cylinder hole 52a is divided by the chuck piston 57 into a first pressure chamber 52b located at the proximal end side in the direction of the third axis L3 and a second pressure chamber 52c located at the distal end side in the direction of the third axis L3.

The side wall 52e of the cylinder tube 52 has a first port 52d through which air is supplied and exhausted at a distal end side, and the first port 52d is in communication with the second pressure chamber 52c. The side wall 52e of the cylinder tube 52 has a second port 52f through which air is supplied and exhausted at a proximal end side, and the second port 52f is in communication with the first pressure chamber 52b. A latch yoke 56 is in a proximal end portion of the cylinder hole 52a and closes the opening of the cylinder hole 52a at the proximal end.

The chuck piston 57 includes a disc-shaped seal holder 58 located at the proximal end, a core yoke 59 attached to the middle of the distal end face of the seal holder 58, a permanent magnet 60 located circumferentially outwardly from the core yoke 59, a cover yoke 61 located circumferentially outwardly from the permanent magnet 60, and a ring plate 62 attached to the distal end of the permanent magnet 60.

The seal holder 58 has an annular groove in the outer peripheral surface, and a piston seal 63 that is in sliding contact with the inner surface of the cylinder hole 52a is in the annular groove. The core yoke 59 has a cylindrical shape, and the core yoke 59 has a recess 59b open at the distal end.

The cover yoke 61 has a hollow cylindrical shape and is attached to the outer periphery of the distal end surface of the seal holder 58. The cover yoke 61 has wear rings 65, 65 in two annular grooves located at the proximal end side. These wear rings 65, 65 guide and support the chuck piston 57 along the cylinder hole 52a. There is an annular space 66 between the inner peripheral surface of the cover yoke 61 and the outer peripheral surface of the core yoke 59, and the permanent magnet 60 is in this space 66.

The bottom cover 54 has a disc-shape and closes the opening of the cylinder hole 52a at the distal end. The bottom cover 54 has a workpiece attracting surface 48a extending in a direction perpendicular to the third axis L3 at the distal end.

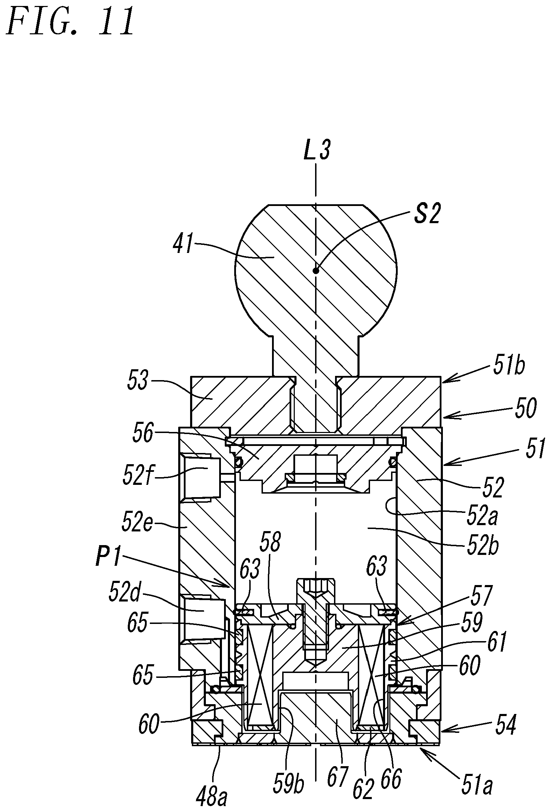

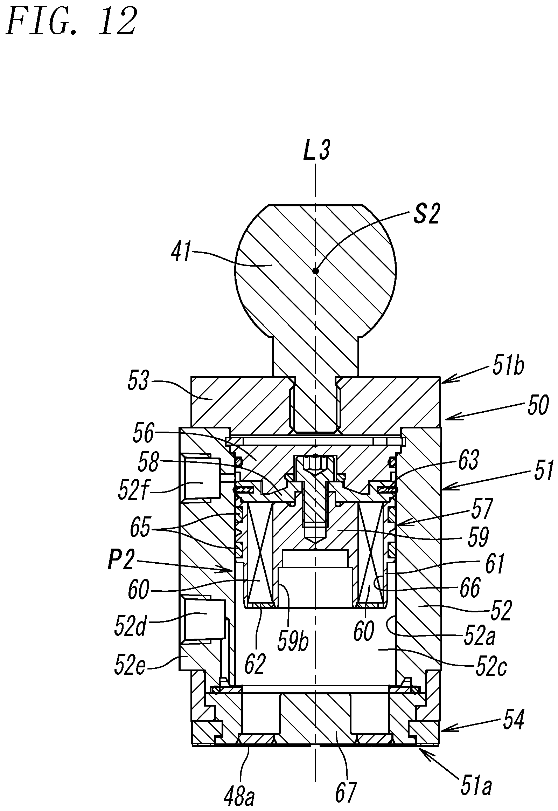

In the chuck unit 50 having the above-describe configured, the chuck piston 57 can be reciprocated in the direction of the third axis L3 by compressed air provided to and discharged from the first and second pressure chambers 52b, 52c of the cylinder hole 52a, and the permanent magnet 60 can be moved in the direction of the third axis L3 between an attracting position P1 (see Fig. 11) that is located adjacent to the distal end of the casing 51 to which the permanent magnet 60 is moved to attract a workpiece with the workpiece attracting surface 48a and a non-attracting position P2 (see Fig. 12) that is located adjacent to the proximal end of the casing 51 to which the permanent magnet 60 is moved to end the attraction of the workpiece 110.

The top cover 53 is fixed to the proximal end 51b of the casing 51 by bolts or other fasteners, and a distal end portion of the second ball member 41 is screwed to the middle of the top cover 53.

As above, the casing 51 of the chuck unit 50 has the cylinder hole 52a extending in the direction of the third axis L3 in which the permanent magnet 60 is moved between the attracting position P1 and the non-attracting position P2. The second ball member 41 protrudes from the proximal end of the casing 51. Thus, the chuck unit 50 has a vertically long cuboidal shape extending in the direction of the third axis L3.

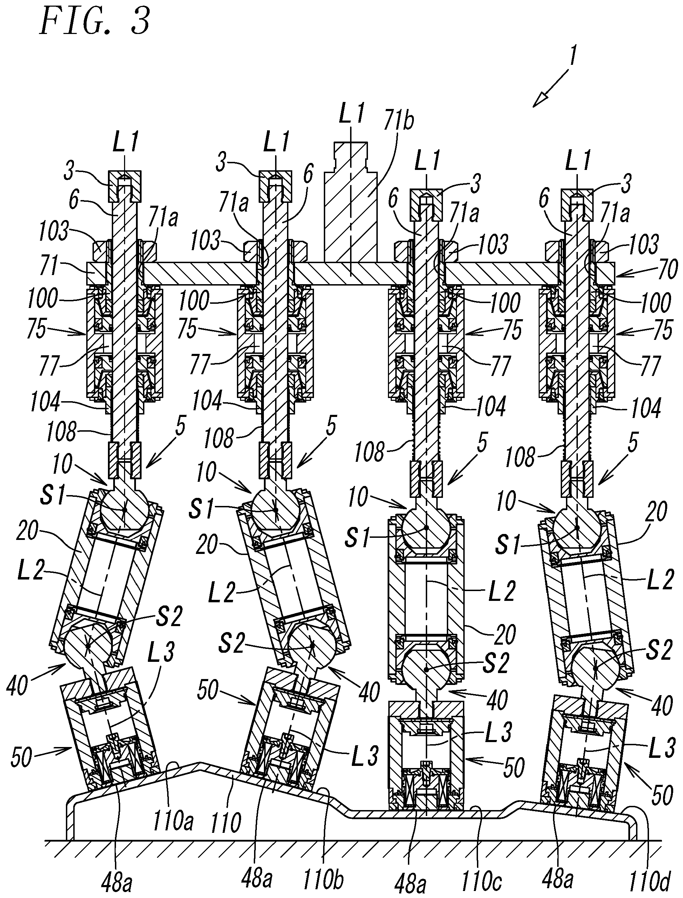

Next, the support 70 is described. As illustrated n in Figs. 1 and 3, the support 70 includes the arm support member 71 having through holes 71a in which the support rods 6 of the magnetic chucks 5 are individually inserted in a reciprocable manner, a plurality of connectors 75 attached to the arm support member 71 and having communication holes 77 in which the support rods 6 of the magnetic chucks 5 are individually inserted, stoppers 3 attached to the corresponding support rods 6 and each configured to be brought into contact with the proximal end of the connector 75 when the support rod 6 is moved to prevent the support rod 6 from being detached from the through holes 71a, and compression coil springs 108 (spring members, compression springs) each located between the connector 75 and the support rod 6 of the respective magnet chucks 5 and configured to urge the magnetic chucks 5 toward the distal end in the direction of the first axis L1 relative to the arm support member 71.

In this embodiment, the arm support member 71 has a plate-like shape, which extends in a direction perpendicular to the first axis L1 (horizontal direction) and has distal and proximal end surfaces at ends in the direction of the first axis L1, and multiple through holes 71a are provided in the arm support member 71 at equal intervals in the horizontal direction. A connecting support 71b protruding in the direction of the first axis L1 toward the proximal end is attached to the middle in the horizontal direction of the arm support member 71. A distal arm of a robot or a lift, for example, is connected to this connecting support 71b. The support rod 6 is inserted into each of the through holes 71a in the direction of the first axis L1.

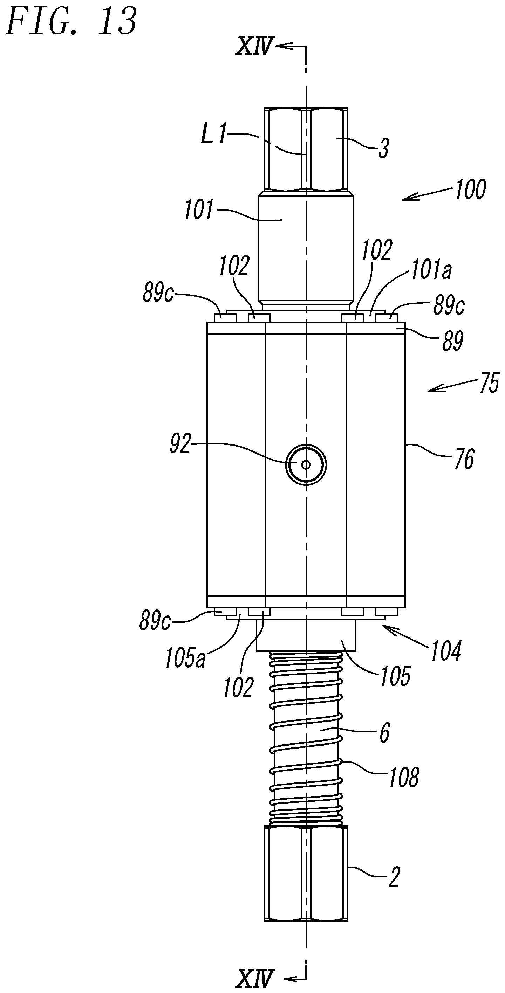

As illustrated in Figs. 3 and 13 to 16, the connector 75 has a connecting body 76 extending in the direction of the first axis L1 and having a proximal end 76b (first end) and a distal end 76c (second end) at the ends. The connecting body 76 has the communication hole 77 extending therethrough in the direction of the first axis L1.

A second locking mechanism 80 that can lock and unlock the support rod 6 against and from the arm support member 71 is provided in the communication hole 77 of the connecting body 76. In this embodiment, the second locking mechanism 80 includes a proximal second locking mechanism 81 at the proximal end side of the communication hole 77 and a distal second locking mechanism 82 at the distal end side of the communication hole 77.

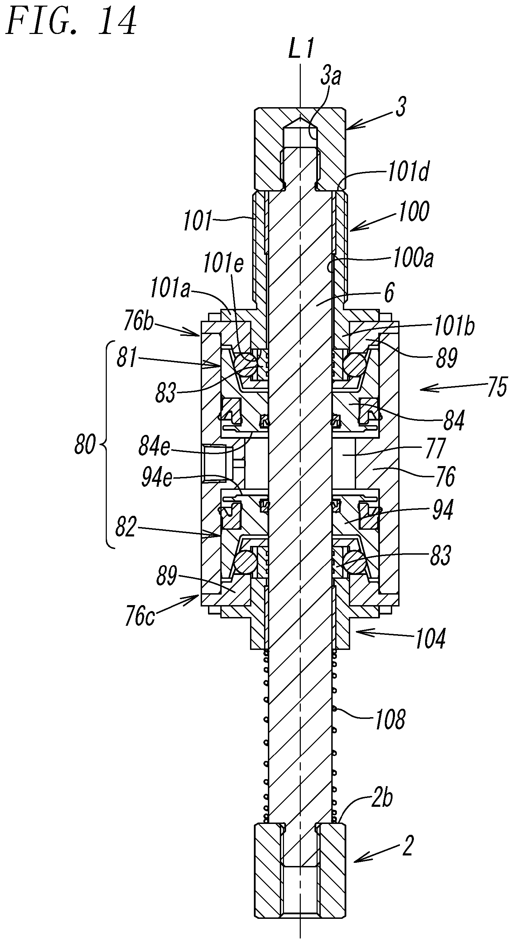

As illustrated in Figs. 14 to 16, the proximal second locking mechanism 81 includes a third cylinder hole 78 located at the proximal end side of the communication hole 77 in the connecting body 76 and extending in the direction of the first axis L1, a brake pad 83 having a pressing surface 83d facing the side surface of the support rod 6 in the third cylinder hole 78, a third piston 84 movable in the third cylinder hole 78 in the direction of the first axis L1 and having a sloping surface 84a located radially outward from the brake pad 83 relative to the first axis L1 in the third cylinder hole 78, and a pressing member 85 located between the brake pad 83 and the sloping surface 84a to receive a pressing force applied by the sloping surface 84a in a radially inward direction when the third piston 84 is moved, and a third pressure chamber 86 that is a portion of the third cylinder hole 78 defined by the third piston 84.

In this embodiment, the third cylinder hole 78 has a hollow cylindrical shape open at the proximal end of the connecting body 76, and the inner diameter of the third cylinder hole 78 is larger than that of the communication hole 77. The third cylinder hole 78 has an annular step 78a extending in a direction perpendicular to the direction of the first axis L1 at the distal end.

Furthermore, in this embodiment, the brake pad 83 having a hollow cylindrical shape is formed of an elastic member such as synthetic resin. The brake pad 83 includes separated multiple brake pieces 83a arranged at equal intervals in the circumferential direction. The brake pieces 83a each have a fan-like shape that extends radially outward from the first axis L1, and the brake piece 83a has an arc-shaped pressing surface 83d, which is a radially inner surface against which the side surface of the support rod 6 slides. The pressing surfaces 83d of the multiple brake pieces 83a that are arranged continuously in a circumferential direction form a portion of the through hole 83b that surrounds the outer peripheral surface of the support rod 6 and through which the support rod 6 is inserted. The pressing surface 83d has multiple annular grooves 83e, which open in the radially inward direction and surrounds the support rod 6, at intervals in the direction of the first axis L1. The brake piece 83a has a groove 83c that accommodates a portion of the pressing member 85 and extends in the direction of the first axis L1 in the outer surface.

Furthermore, in this embodiment, the third piston 84 has a cylindrical shape and has a through hole 84b extending therethrough in the direction of the first axis L1 in the middle. The support rod 6 is inserted in this through hole 84b in a movable manner in the direction of the first axis L1. The third piston 84 has a third hole 84c at the proximal end, and the third hole 84c is recessed to the middle of the third piston in the direction of the first axis L 1. The inner surface of the third hole 84c has a sloping surface 84a that extends annularly around the pressing member 85 and has an inner diameter gradually increasing toward the proximal end.

The third piston 84 has an annular groove 84d extending in the circumferential direction in a distal end portion of the outer peripheral surface, and a sealing member 87 sealing between the outer peripheral surface of the third piston 84 and the inner peripheral surface of the third cylinder hole 78 is in the groove 84d. Furthermore, a sealing member 88 that seals between the inner surface of the through hole 84b and the side surface of the support rod 6 is in an annular groove extending in the circumferential direction in the inner surface of the through hole 84b of the third piston 84. The sealing members 87, 88 are lip seals, and lips 87a, 88a are tilted such that the outer diameter gradually increases toward the distal end in the direction of the first axis L1. Thus, the lips 87a, 88a prevent the compressed air from flowing from the distal end side to the proximal end side between the outer peripheral surface of the third piston 84 and the inner peripheral surface of the third cylinder hole 78 and between the inner surface of the through hole 84b and the side surface of the support rod 6.

Furthermore, in this embodiment, the pressing member 85 includes multiple metal balls 85a, and the balls 85a are in the corresponding grooves 83b of the brake pieces 83a. The balls 85a are supported by a ball support member 89.

Furthermore, in this embodiment, the ball support member 89 has a hollow cylindrical shape having a hole 89a open at the proximal end and has an annular flange 89b protruding radially outward from the proximal end of the ball support member 89. The flange 89b disposed on the proximal end of the connecting body 76 is fixed to the connecting body 76 by bolts 89c or other fasteners. The hole 89a is a hollow cylindrical hole extending in the direction of the first axis L1 toward the distal end, and the bottom surface of the hole 89a extends in a direction perpendicular to the direction of the first axis L1. The hole 89a has a through hole 89d, in which the support rod 6 is inserted, in the middle of the bottom surface. The hole 89a accommodates the brake pad 83 mounted on the support rod 6. The distal end of the brake pad 83 is in contact with the bottom surface of the hole 89a. This prevents the brake pad 83 from moving toward the distal end.

The outer surface of the side wall 90 of the ball support member 89 has a sloping surface 90a having an outer diameter gradually increasing toward the proximal end. The sloping surface 90a extends substantially parallel to the sloping surface 84a of the third piston 84. The side wall 90 of the ball support member 89 has multiple apertures 90b for accommodating the balls 85a at equal intervals in the circumferential direction. The apertures 90b face the corresponding grooves 83c of the brake pieces 83a and extend radially through the side wall 90. The inner diameter of the apertures 90b is slightly larger than the diameter of the ball 85a, and the thickness of the side wall 90 (length of the aperture 90b) is smaller than the diameter of the ball 85a. Thus, the ball 85a can move radially in the aperture 90b, and ends of the ball 85a protrude from the ends of the aperture 90b. The radially inner end of the ball 85a is in contact with the inner surface of the groove 83c of the brake pad 83, and the radially outer end of the ball 85a is in contact with the sloping surface 84a of the third piston 84.

When the radial ends of the ball 85a are in contact with the brake piece 83a and the third piston 84, there is a space 91 between the inner surface of the third hole 84c of the third piston 84 and the outer surface of the ball support member 89 and between the end surface at the proximal end of the third piston 84 and the inner surface of the proximal end of the ball support member 89. This enables, when the third piston 84 moves toward the proximal end, the sloping surface 84a of the third piston 84 to press the ball 85a.

The third pressure chamber 86 is a distal end portion of the third cylinder hole 78 and defined by the third piston 84. In this embodiment, the third pressure chamber 86 is located between a top 84e at the distal end of the third piston 84 and the bottom surface of the third cylinder hole 78 and is in communication with the communication hole 77. The connecting body 76 has a supply and discharge port 92 in the middle in the direction of the first axis L1 through which compressed air is introduced from the outside into the communication hole 77.

Next, the distal second locking mechanism 82 is described. The distal second locking mechanism 82 has substantially the same configuration as the above-described proximal second locking mechanism 81. Thus, components different from those of the proximal second locking mechanism 81 are explained, and components having the same configurations as those of the proximal second locking mechanism 81 will not be described.

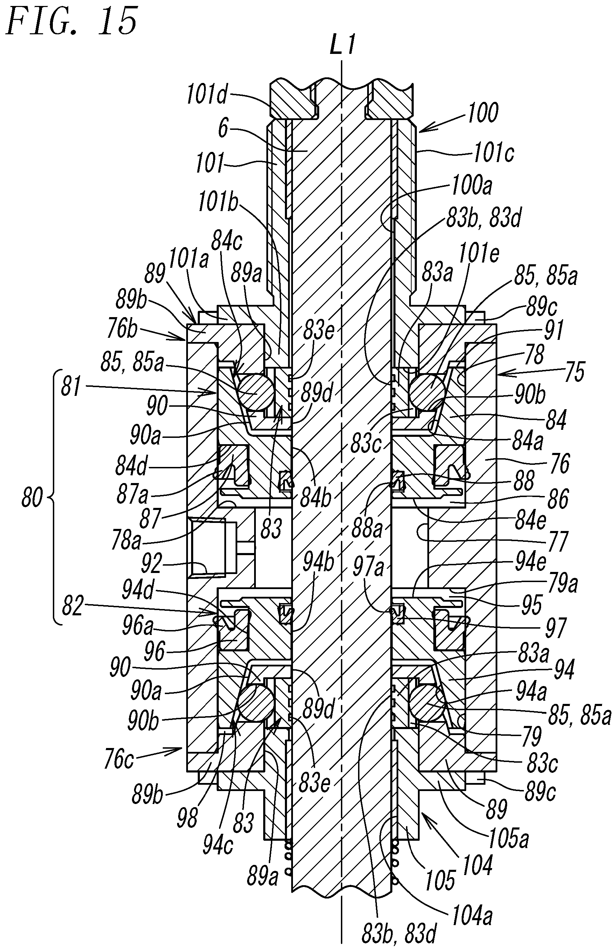

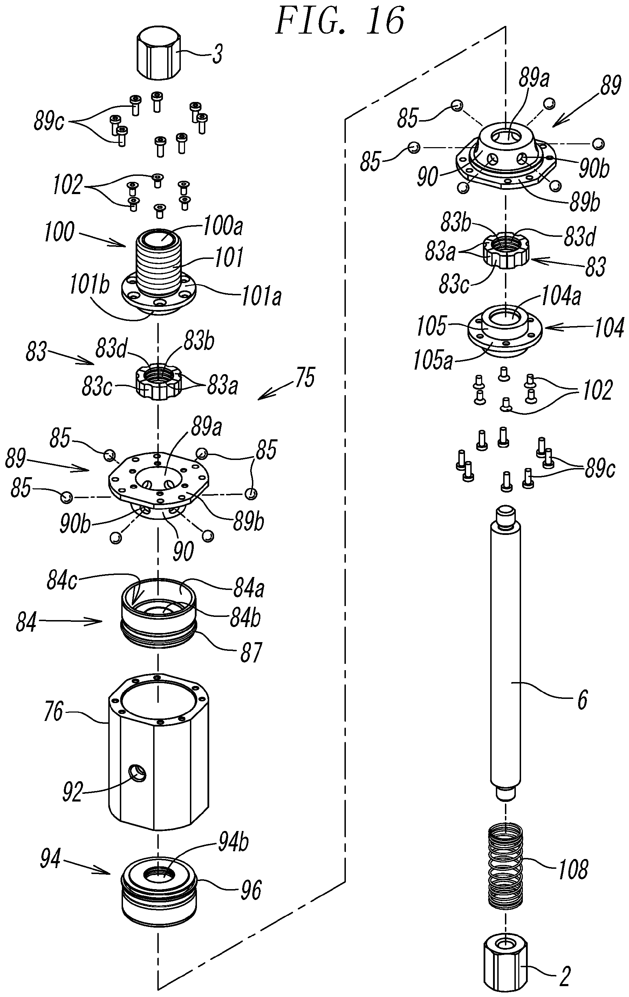

In this embodiment, as illustrated in Figs. 15 and 16, the distal second locking mechanism 82 includes a fourth cylinder hole 79 located at the distal end side of the communication hole 77 in the connector 75, a brake pad 83 having a pressing surface 83d facing the side surface of the support rod 6 in the fourth cylinder hole 79, a fourth piston 94 movable in the fourth cylinder hole 79 and having a sloping surface 94a located radially outward from the brake pad 83 in the fourth cylinder hole 79, and a pressing member 85 located between the brake pad 83 and the sloping surface 94a to receive a pressing force applied by the sloping surface 94a in a radially inward direction when the fourth piston 94 is moved, and a fourth pressure chamber 95 that is a portion of the fourth cylinder hole 79 defined by the fourth piston 94.

The fourth cylinder hole 79 has a hollow cylindrical shape open at the distal end of the connecting body 76, and the inner diameter of the fourth cylinder hole 79 is larger than that of the communication hole 77. The fourth cylinder hole 79 has an annular step 79a extending in a direction perpendicular to the direction of the first axis L 1 at the distal end.

The brake pad 83, which is identical to the brake pad 83 of the proximal second locking mechanism 81, will not be explained.

Furthermore, in this embodiment, the fourth piston 94 has a through hole 94b extending therethrough in the middle and in which the support rod 6 is movable in the direction of the first axis L1. The fourth piston 94 has a fourth hole 94c at the distal end. The inner surface of the fourth hole 94c is a sloping surface 94a having an inner diameter gradually increasing toward the distal end.

The fourth piston 94 has an annular groove 94d in a proximal end portion of the outer peripheral surface, and a sealing member 96 sealing between the outer peripheral surface of the fourth piston 94 and the inner peripheral surface of the fourth cylinder hole 79 is in the groove 94d. Furthermore, a sealing member 97 that seals between the inner surface of the through hole 94b and the side surface of the support rod 6 is in an annular groove in the inner surface of the through hole 94b of the fourth piston 94. The sealing members 96, 97 are lip seals, and lips 96a, 97a of the sealing members 96, 97 are tilted such that the outer diameter gradually increases from the distal end side toward the proximal end side. Thus, the lips 96a, 97a prevent the compressed air from flowing from the proximal end side to the distal end side between the outer peripheral surface of the fourth piston 94 and the inner peripheral surface of the fourth cylinder hole 79 and between the inner surface of the through hole 94b and the side surface of the support rod 6.

Furthermore, in this embodiment, the pressing member 85 includes multiple metal balls 85a, which are supported by the ball support member 89. The ball support member 89 has a cylindrical shape having the hole 89a open at the distal end. The flange 89b located at the distal end of the ball support member 89 is fixed to the distal end of the connecting body 76 by the bolts 89c or other fasteners. The support rod 6 is in the through hole 89d in the bottom surface of the hole 89a, and the hole 89a accommodates the brake pad 83 attached to the support rod 6. The proximal end of the brake pad 83 is in contact with the bottom surface of the hole 89a. This prevents the brake pad 83 from moving toward the distal end.

Furthermore, in this embodiment, the outer surface of the side wall 90 of the ball support member 89 has a sloping surface 90a that has an outer diameter gradually increasing toward the distal end. The sloping surface 90a extends parallel to the sloping surface 94a of the fourth piston. The side wall 90 of the ball support member 89 has multiple apertures 90b that accommodate the corresponding balls 85a. The radially inner end of the ball 85a in the aperture 90b is in contact with the inner surface of the groove 83c of the brake pad 83, and the radially outer end of the ball 85a is in contact with the sloping surface 94a of the fourth piston 94.

When the ball 85a is in contact with the brake piece 83a and the fourth piston 94, there is a space 98 between the inner surface of the fourth hole 94c of the fourth piston 94 and the outer surface of the ball support member 89 and between the end surface at the distal end of the fourth piston 94 and the inner surface of the proximal end of the ball support member 89. This enables, when the fourth piston 94 moves toward the distal end, the sloping surface 94a of the fourth piston 94 to press the ball 85a.

Furthermore, the fourth pressure chamber 95 is a proximal end portion of the fourth cylinder hole 79 defined by the fourth piston 94. In this embodiment, the fourth pressure chamber 95 is located between a top 94e at the proximal end of the fourth piston 94 and the bottom surface of the fourth cylinder hole 79 and is in communication with the communication hole 77.

In the proximal and distal second locking mechanisms 81, 82 having the above configuration, compressed air is supplied to or discharged from the third and fourth pressure chambers 86, 95 through the supply and exhaust port 92 and the communication hole 77 to start or end pushing of the third and fourth pistons 84, 94 against the pressing member 85. For example, when the third and fourth pistons 84, 94 are moved or pressed toward the ends in the direction of the first axis L1 of the connecting body 76 by compressed air provided to the third and fourth pressure chambers 86, 95, the balls 85a receive a pressing force in the radially inward direction from the sloping faces 84a, 94a. This pushes the brake pads 83, 83 in the radially inward direction, and the pressing surfaces 83d, 83d push the side surface of the support rod 6. This locks the support rod 6 against the arm support member 71 (the connecting body 76).

As illustrated in Figs. 3, 15, and 16, a fixing member 100, which has an insertion hole 100a extending therethrough in the direction of the first axis L1 and is inserted in the through hole 71a of the arm support member 71, is attached to the proximal end of the connecting body 76. In this embodiment, the fixing member 100 has a fixing body 101 that has a tubular shape extending in the direction of the first axis L1 and having a proximal end 101d and a distal end 101e, an annular flange 101a that protrudes radially outward from the distal end of the fixing body 101, and a tubular locking protrusion 101b protruding from the distal end of the fixing body 101. The flange 101a on the proximal end of the ball support member 89 is fixed to the ball support member 89 by screws 102 or other fasteners. Thus, the fixing member 100 is fixed to the connecting body 76 with the ball support member 89 therebetween.

When the support rod 6 is in the insertion hole 100a of the fixing member 100 and the flange 101a is fixed to the proximal end of the ball support member 89, the locking protrusion 101b of the fixing member 100 is fitted in the hole 89a of the ball support member 89. In such a state, the tip of the locking protrusion 101b is in contact with the proximal end of the brake pad 83. Thus, the brake pad 83 is sandwiched between the locking protrusion 101b and the bottom surface of the hole 89a of the ball support member 89 and thus cannot move toward ends in the direction of the first axis L1.

The outer diameter of the fixing body 101 is smaller than the inner diameter of the through hole 71a of the arm support member 71, and the fixing body 101 has a male thread 101c on a proximal end portion of the side surface. When the fixing body 101 is in the through hole 71a of the arm support member 71 with the proximal end surface of the flange 101a being in contact with the distal end surface of the arm support member 71, the proximal end portion of the fixing body 101 protrudes from the through hole 71a. A mounting nut 103 is screwed to the male thread 101c of the protruding fixing body 101 to fix the fixing member 100 to the arm support member 71. Thus, the connecting body 76 is detachably fixed to the arm support member 71 with the fixing member 100 therebetween.

In this embodiment, as illustrated in Figs. 3, 15, and 16, a cover member 104 having an insertion hole 104a that extends therethrough in the direction of the first axis L1 is attached to the distal end 76c of the connecting body 76. The cover member 104 includes a tubular cover body 105 extending in the direction of the first axis L1 and an annular flange 105a protruding radially outward from the middle in the direction of the first axis L1 of the cover body 105. The flange 105a on the distal end of the ball support member 89 is fixed to the ball support member 89 by screws 102 or other fasteners. Thus, the cover member 104 is fixed to the connecting body 76 with the ball support member 89 therebetween.

The proximal end of the cover body 105 is in contact with the distal end of the brake pad 83. Thus, the brake pad 83 is sandwiched between the cover body 105 and the bottom surface of the hole 89a of the ball support member 89 and thus cannot move toward ends in the direction of the first axis L 1.

In this embodiment, as illustrated in Figs. 3 and 14, the support rod 6 has the stopper 3 attached to the proximal end 6b of the support rod 6 with its proximal end portion protruding from the proximal end of the insertion hole 100a of the fixing member 100. In this embodiment, the stopper 3 has a cylindrical shape, and the diameter of the stopper 3 is larger than the inner diameter of the insertion hole 100a of the fixing member 100 and smaller than the inner diameter of the through hole 71a of the arm support member 71. This allows the stopper 3 to pass through the through hole 71a of the arm support member 71, and thus the stopper 3 can be inserted into and removed from the through hole 71a of the arm support member 71 with the stopper 3 attached to the support rod 6. Furthermore, the stopper 3 is larger than the inner diameter of the insertion hole 100a of the fixing member 100. When the support rod 6 is moved toward the distal end of the connector 75, the support rod 6 comes in contact with the proximal end 101d of the fixing body 101 of the fixing member 100, and thus the support rod 6 cannot detach from the connector 75.

In this embodiment, the connecting nut 2 screwed to the distal end of the support rod 6 has a larger diameter than the outer diameter of the support rod 6. Thus, when the connecting nut 2 is attached to the support rod 6, the proximal end of the connecting nut 2 forms a spring seat 2b (stepped portion) that protrudes radially outward from the support rod 6.

A compression coil spring (compression spring, spring member) 108 is located between the spring seat 2b and the cover member 104. In this embodiment, the compression coil spring 108 has one end in contact with the distal end of the cover member 104 and the other end in contact with the spring seat 2b of the connecting nut 2 while having the support rod 6 in it. The compression coil spring 108 always urges the support rod 6 toward the distal end.

As illustrated in Fig. 1, the workpiece clamping device 1 includes the magnetic chucks 5 mounted on the arm support member 71. The magnetic chucks 5 are mounted on the arm support member 71 so that the support rods 6 are parallel to each other.

The following is a description of a case in which the workpiece clamping device 1 attracts a workpiece 110 that has a surface (hereinafter, referred to as "upper surface") at the proximal end in the direction of the first axis L1 (hereinafter, referred to as "vertical direction") including a non-sloping surface, which extends in a direction perpendicular to the vertical direction (hereinafter, referred to as "left-right direction"), and sloping surfaces, which are tilted in different horizontal directions.

In this embodiment, the non-sloping surface and the sloping surfaces of the workpiece 110 are partly located at different high positions in the vertical direction. Specifically, as illustrated in Fig. 3, the workpiece 110 is a metal plate bent at multiple positions and has a first sloping surface 110a, a second sloping surface 110b, a non-sloping surface 110c, and a third sloping surface 110d, in this order from left to right. The first sloping surface 110a is an upward sloping surface that slopes upward from the left side to the right side. The second sloping surface 110b is a downward sloping surface that is located at the same height position as the first sloping surface 110a and slopes downward from the left side to the right side. The non-sloping surface 110c is located below the first and second sloping surfaces 110a, 110b and extends in the left-right direction. The third sloping surface 110d is a downward sloping surface that has a middle section in the left-right direction at the same height position as the non-sloping surface 110c and slopes downward at a smaller angle than the second sloping surface 110b.

When the workpiece clamping device 1 is used to attract the workpiece 110 having such a configuration, the workpiece 110 is first placed under the workpiece clamping device 1. Then, as illustrated in Fig. 5, the pivot arm 20 locked against the support rod 6 and the chuck unit 50 by the first locking mechanism 37 is unlocked, and the support rod 6 locked against the connecting body 76 by the second locking mechanism 80 is unlocked. Furthermore, the permanent magnet 60 of the chuck unit 50 is moved to the attracting position P1. This makes the support rod 6 movable in the vertical direction relative to the connecting body 76, and, when the entire magnetic chuck 5 is moved downward, the stopper 3 comes into contact with the proximal end 101d of the fixing member 100. This stops the magnetic chuck 5 from moving downward, and the entire magnetic chuck 5 is in a straight posture in the direction of the first axis L1.

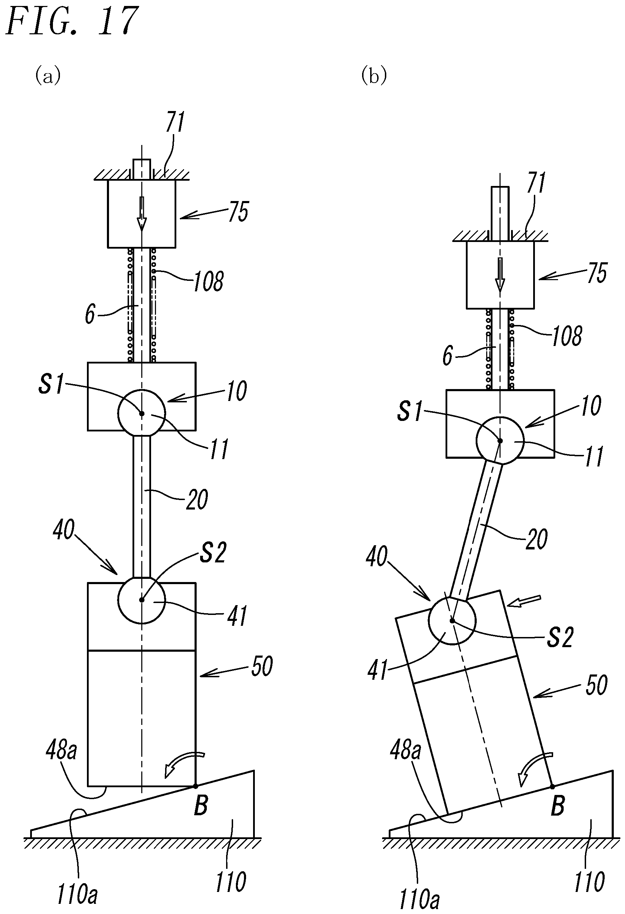

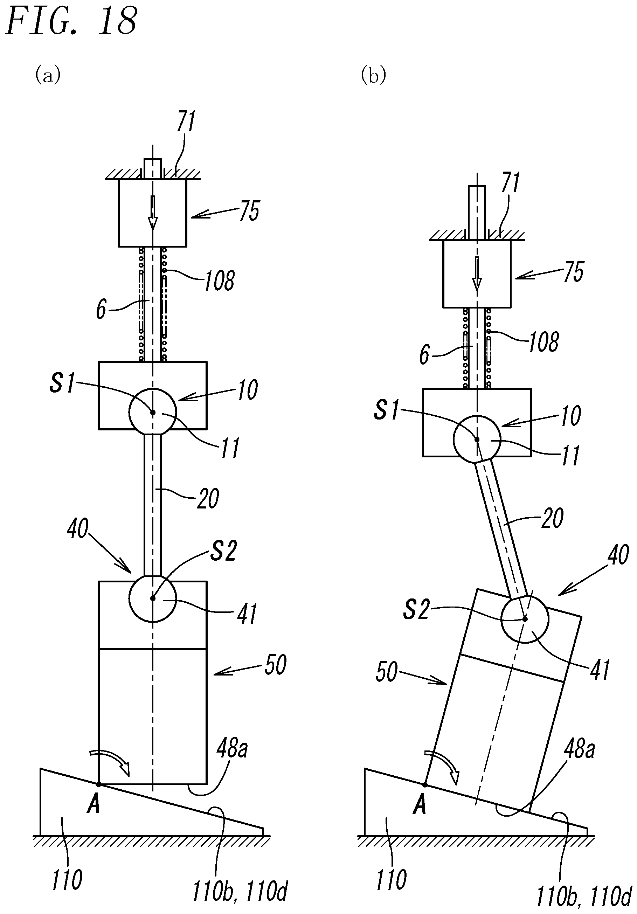

In such a state, when the workpiece clamping device 1 is moved downward, as illustrated in Figs. 17(a) and 18(a), the workpiece attracting surfaces 48a of the chuck unit 50 located over the corresponding first and second sloping surfaces 110a and 110b, which are located at the highest position among the sloping surfaces of the workpiece 110, come in contact with the first and second sloping surfaces 110a and 110b. In this case, the chuck unit 50 that came in contact with the first sloping surface 110a is in contact with the first sloping surface 110a at the right edge B of the workpiece attracting surface 48a (see Fig. 17(a)), and the chuck unit 50 that came in contact with the second sloping surface 110b is in contact with the second sloping surface 110b at the left edge A of the workpiece attracting surface 48a (see Fig. 17(a)).

Then, when the workpiece clamping device 1 is further moved downward, the magnetic chucks 5 receive a reaction force from these sloping surfaces 110a, 110b, moving the magnetic chucks 5, which is in a straight posture, upward toward the arm support member 71 that is moving downward. This compresses the compression coil springs 108. Thus, as illustrated in Fig. 17(b) and Fig. 17(b), with the left and right edges A, B of the chuck units 50 being in contact with the first and second sloping surfaces 110a and 110b, the combination of the downward movement of the magnetic chuck 5 and the pressing force of the compression coil spring 108 allows the pivot arm 20 to pivot in the left-right direction about the first central point S1 of the first j oint 10 and also allows the chuck unit 50 to pivot in the left-right direction about the second central point S2 of the second joint 40. Thus, the respective workpiece attracting surfaces 48a positioned along the first and second sloping surfaces 110a, 110b can come in contact with and attract the first and second sloping surfaces 110a, 110b without shifting from a predetermined position.

Furthermore, as illustrated in Fig. 18(a), when the workpiece clamping device 1 is moved downward, the left edge A of the workpiece attracting surface 48a of the magnetic chuck 5 located over the third sloping surface 110d comes in contact with the third sloping surface 110d. When the workpiece clamping device 1 is further moved downward, the magnetic chuck 5 receives a reaction force from the third sloping surface 110d, moving the magnetic chuck 5, which is in a straight posture, upward toward the arm support member 71 that is moving downward. This compresses the compression coil spring 108. Thus, as illustrated in Fig. 18(b), with the left edge A of the chuck unit 50 being in contact with the third sloping surface 110d, the combination of the downward movement of the magnetic chuck 5 and the pressing force of the compression coil spring 108 allows the pivot arm 20 to pivot in the right direction about the first central point S1 of the first joint 10 and also allows the chuck unit 50 to pivot to the left side about the second central point S2 of the second joint 40. Thus, the workpiece attracting surface 48a positioned along the third sloping surface 110d can come in contact with and attract a workpiece without shifting from a predetermined position.

Furthermore, as illustrated in Fig. 3, when the workpiece clamping device 1 is moved downward, the workpiece attracting surface 48a of the chuck unit 50 of the magnetic chuck 5 that is located over the non-sloping surface 110c comes in contact with the non-sloping surface 110c while positioned along the non-sloping surface 110c. When the workpiece clamping device 1 is further moved downward, the magnetic chuck 5 receives a reaction force from the third sloping surface 110d, moving the magnetic chuck 5, which is in a straight posture, upward toward the arm support member 71 that is moving downward. This compresses the compression coil spring 108. Thus, the combination of the downward movement of the magnetic chuck 5 and the pressing force of the compression coil spring 108 presses the workpiece attracting surface 48a of the chuck unit 50 onto the non-sloping surface 110c. At this time, the pivot arm 20 does not pivot about the first central point S1 of the first joint 10 and the second central point S2 of the second joint 40, and thus the magnetic chuck 5 is kept in a straight posture. Thus, the workpiece attracting surface 48a positioned along the non-sloping surface 110c can come in contact with and attract a workpiece without shifting from a predetermined position.

Then, compressed air is provided to the first locking mechanism 37 and the second locking mechanism 80 of each of the magnetic chucks 5 to lock the support rod 6 against the arm support member 71 and disables the pivot arm 20 to pivot relative to the support rod 6 and the chuck unit 50. This makes the respective workpiece attracting surfaces 48a of the chuck units 50 keep attracting the corresponding sloping surfaces. Then, when the workpiece clamping device 1 is moved upward, the workpiece 110 can then be moved upward without tilting.

As described above, in the workpiece clamping device 1 according to the present invention, the proximal end of the pivot arm 20 is pivotably connected to the distal end of the support rod 6 through the first joint 10, and the distal end of the pivot arm 20 is pivotably connected to the proximal end of the chuck unit 50 through the second joint 40. Thus, even when the upper surface of the workpiece 110 is tilted with respect to the workpiece attracting surface 48a, the workpiece attracting surface 48a positioned along the upper surface of the workpiece can attract the upper surface of the workpiece without shifting from a predetermined position.

In the above-described embodiment, the chuck unit 50 is vertically long but may be horizontally long, i,e., may have a width larger than the length in the direction of the third axis L3.

### Reference Signs List

1 workpiece clamping device
3 stopper
5 magnetic chuck
6 support rod
6a, 51a, 76b distal end
6b, 51b, 76c proximal end
10 first joint
11 first ball member
12 first recess
20 pivot arm
21 first cover member
22 first through hole
22a first outer sliding-contact surface
23 first piston
24 first hole
24a first inner sliding-contact surface
26, 35 inner space
28 first cylinder hole
29 second cylinder hole
30 second piston
32 second cover member
33 second through hole
33a second outer sliding-contact surface
34 second hole
34a Second inner sliding-contact surface
37 first locking mechanism
40 second joint
41 second ball member
42 second recess
48a workpiece attracting surface
50 chuck unit
51 casing
52a cylinder hole
52b first pressure chamber
52c second pressure chamber
57 chuck piston
60 permanent magnet
70 support
71 arm support member
71a through hole
75 connector
76 connecting body
77 communication hole
78 third cylinder hole
80 second locking mechanism
81 proximal second locking mechanism (second locking mechanism)
82 distal second locking mechanism (second locking mechanism)
83 brake pad
84 third piston
85 pressing member
86 third pressure chamber
94 fourth piston
95 fourth pressure chamber
100 fixing member
108 compression coil spring (spring member, compression spring)
L1 first axis
L2 second axis
L3 third axis
P1 attracting position
P2 non-attracting position
S1 first central point
S2 second central point

## Claims

1. A workpiece clamping device comprising a magnetic chuck including: a support rod that is reciprocable in a direction of a first axis and has a distal end and a proximal end at ends in a movement direction thereof, a pivot arm that has a first end and a second end at ends in a direction of a second axis and is pivotably connected to the distal end of the support rod at the first end through a first j oint, a chuck unit that includes a casing having a distal end and a proximal end at ends in a direction of a third axis and pivotably connected to the second end of the pivot arm at the proximal end of the casing through a second joint and that is configured to attract a workpiece with a magnetic force, wherein,
in the chuck unit, the magnetic chuck has a workpiece attracting surface extending in a direction perpendicular to the third axis at the distal end of the casing,
the first joint has a first central point,
the support rod and the pivot arm are pivotable relative to each other about the first central point,
the second joint has a second central point, and
the pivot arm and the chuck unit are pivotable relative to each other about the second central point.

2. The workpiece clamping device according to claim 1, wherein the chuck unit has a cylinder hole extending in the direction of the third axis in the casing, a chuck piston movable in the cylinder hole, and a permanent magnet attached to the chuck piston to move with the chuck piston, and
the permanent magnet is reciprocable in the direction of the third axis between an attracting position that is located adjacent to the distal end of the casing to which the permanent magnet is moved to attract a workpiece with the workpiece attracting surface and a non-attracting position that is located adjacent to the proximal end of the casing to which the permanent magnet is moved to end attraction of the workpiece.

3. The workpiece clamping device according to claim 1 or 2, wherein the first joint includes a first ball member having the first central point and a first recess accommodating the first ball member in a slidable manner, and
the second joint includes a second ball member having the second central point and a second recess accommodating the second ball member in a slidable manner.

4. The workpiece clamping device according to claim 3, wherein, in the first joint, the first ball member is attached to the support rod and the first recess is open at the first end of the pivot arm, and, in the second joint, the second ball member is attached to the proximal end of the chuck unit and the second recess is open at the second end of the pivot arm.

5. The workpiece clamping device according to claim 4, wherein the pivot arm has a first locking mechanism that enables and disables relative pivoting between the first ball member in the first recess and the first recess of the first joint and relative pivoting between the second ball member in the second recess and the second recess of the second joint.

6. The workpiece clamping device according to claim 5, wherein the pivot arm has a first cover member attached to the first end of the pivot arm and having a first through hole extending therethrough in the direction of the second axis and a second cover member attached to the second end of the pivot arm and having a second through hole extending therethrough in the direction of the second direction,
the first locking mechanism includes:
the first and second through holes in the first and second cover members;
first and second cylinder holes in first and second end portions of the pivot arm;
a first piston movable in the first cylinder hole and having a first hole that open at the first end;
a second piston movable in the second cylinder hole and having a second hole that open at a second end;
a first pressure chamber located in a second end portion of the first cylinder hole in the direction of the second axis and defined by the first piston; and
a second pressure chamber located in a first end portion of the second cylinder hole in the direction of the second axis and defined by the second piston,
the first through hole and the first hole are in communication with each other in the direction of the second axis, and an inner space defined by the first through hole and the first hole is the first recess accommodating the first ball member,
an inner surface of the first through hole has a first outer sliding-contact surface that is in sliding contact with a portion of the outer surface of the first ball member that is adjacent to the first end in the direction of the second axis,
an inner surface of the first hole has a first inner sliding-contact surface that is in sliding contact with a portion of the outer surface of the first ball member that is adjacent to the second end in the direction of the second axis,
the second through hole and the second hole are in communication with each other in the direction of the second axis, and an inner space defined by the second through hole and the second hole is the second recess accommodating the second ball member,
an inner surface of the second through hole has a second outer sliding-contact surface that is in sliding contact with a portion of the outer surface of the second ball member that is adjacent to the second end in the direction of the second axis,
an inner surface of the second hole has a second inner sliding-contact surface that is in sliding contact with a portion of the outer surface of the second ball member that is adjacent to the second end in the direction of the second axis,
the first and second pistons are reciprocated in the direction of the second axis by compressed air provided to and discharged from the first and second pressure chambers of the first and second cylinder holes, and
when the first piston is moved toward the first end in the direction of the second axis and the second piston is moved toward the second end in the direction of the second axis by the compressed air provided to the first and second pressure chambers, the first ball member is held on the first outer sliding-contact surface and the first inner sliding-contact surface and the second ball member is held on the second outer sliding-contact surface and the second inner sliding-contact surface, allowing the pivot arm to be locked against the support rod and the chuck unit.

7. The workpiece clamping device according to claim 6, wherein the first outer sliding-contact surface of the first through hole is in contact with a portion of the outer surface of the first ball member that is away from the first central point toward the first end in the direction of the second axis,
the first inner sliding-contact surface of the first hole is in contact with a portion of the outer surface of the first ball member that is away from the first central point toward the second end in the direction of the second axis,
the second outer sliding-contact surface of the second through hole is in contact with a portion of the outer surface of the second ball member that is away from the second central point toward the second end in the direction of the second axis, and
the second inner sliding-contact surface of the second hole is in contact with a portion of the outer surface of the second ball member that is away from the second central point toward the first end in the direction of the second axis.

8. The workpiece clamping device according to claim 7, wherein the first inner sliding-contact surface of the first piston is a conical surface having an inner diameter gradually increasing toward the first end in the direction of the second axis, and
the second inner sliding-contact surface of the second piston is a conical surface having an inner diameter gradually increasing toward the second end in the direction of the second axis.

9. The workpiece clamping device comprising:
the magnetic chucks according to any one of claims 5 to 8 including a plurality of magnetic chucks, and
a support supporting the support rods of the magnetic chucks in a reciprocable manner, wherein
the support includes:
an arm support member extending in a direction perpendicular to the first axis and having through holes in which the support rods of the magnetic chucks are individually inserted in a reciprocable manner;
a plurality of connectors attached to the arm support member and having communication holes in which the support rods of the magnetic chucks are individually inserted, the plurality of connectors having a second locking mechanism configured to lock and unlock the support rod against and from the arm support member;
stoppers attached to the corresponding support rods and, when the support rods are moved, the stoppers each come in contact with the first end of the connector to prevent the support rod from being detached from the through holes, and
spring members each located between the connector and the support rod of the corresponding magnetic chucks and configured to urge the magnetic chucks toward the first end in the direction of the first axis against the arm support member; and
the support rods of the magnetic chucks are positioned at intervals with the first axes being parallel to each other on the arm support member.

10. The workpiece clamping device according to claim 9, wherein the second locking mechanism of the connector includes:
a third cylinder hole extending in the direction of the first axis in the communication hole of the connector;
a brake pad having a pressing surface facing a side surface of the support rod in the third cylinder hole;
a third piston movable in the third cylinder hole in the direction of the first axis and having a sloping surface located radially outward from the brake pad relative to the first axis in the third cylinder hole;
a pressing member located between the brake pad and the sloping surface and configured to receive a pressing force applied in a radially inward direction by the sloping surface when the third piston moves; and
a third pressure chamber that is a portion of the third cylinder hole defined by the third piston, wherein
compressed air provided to the third pressure chamber of the third cylinder hole allows the third piston to reciprocate in the direction of the first axis, and
when the compressed air provided to the third pressure chamber moves the third piston, the pressing member pushes the brake pad in the radially inward direction upon reception of a pressing force applied in the radially inward direction by the sloping surface, and the pressing surface pushes a side surface of the support rod,
locking the support rod against the arm support member.

11. The workpiece clamping device according to claim 10, wherein the connector includes a connecting body having first and second ends at ends in the direction of the first axis, connected to the arm support member at the first end, and having the communication hole in it,
the connecting body has a fixing member attached to the first end, the fixing member has an insertion hole extending therethrough in the direction of the first axis and is located in the through hole of the arm support member,
the insertion hole is in communication with the communication hole of the connecting body, and the support rod is located in the insertion hole and the communication hole, and
the fixing member in the through hole of the arm support member is detachably attached to the arm support member,
allowing the connecting body to be detachably attached to the arm support member.

12. The workpiece clamping device according to claim 11, wherein the fixing member attached to the arm support member protrudes from a surface at the first end in the direction of the first axis of the arm support member,
the support rod has a proximal end portion protruding from an end in the direction of the first axis of the insertion hole, the stopper is attached to the end portion, and
the stopper has a cylindrical shape having a diameter larger than an inner diameter of the insertion hole of the fixing member and smaller than an inner diameter of the through hole of the arm support.

13. The workpiece clamping device according to claim 11 or 12, wherein the spring member is a compression spring located between the second end of the connecting body and the first end of the support rod.
